# EUROPEAN PATENT APPLICATION

(11) **EP 4 789 779 A1**
(43) Date of publication of application: **12.08.2026**
(21) Application number: 26153668.4
(22) Date of filing: 23.01.2026
(51) Int. Cl.: B07B 4/02, B01D 45/08, B07B 7/01, B07B 11/06, B07B 9/02

(54) **GRAVITY INERTIAL SEPARATOR FOR GRANULATED MATERIALS**

(30) Priority: 07.02.2025 EE 202500009
(71) Applicant: Tallinn University of Technology, 19086 Tallinn (EE)
(72) Inventor: Hussainov, Medhat, 19086 Tallinn (EE); Klauson, Artur, 19086 Tallinn (EE); Goljandin, Dmitri, 19086 Tallinn (EE)
(74) Representative: AAA Patendibüroo OÜ

(57) **Abstract**

Gravity inertial separator for the granulated materials, comprising a longitudinal horizontal separation chamber 3, comprising an entrance 3a at the first end wall for feeding from an air stream formation device 2 into said separation chamber 3 an air stream comprising particles to be separated and exit at the other end wall of said separation chamber 3. Said separation chamber 3 has been divided in a longitudinal direction into multiple vertical sections by the baffle plates 4 rising from the bottom of said separation chamber 3. The air stream formation device comprises three adjacent parallel channels, where into a middle channel an airstream containing particles to be separated is fed and into the lateral channels on either side of said middle channel an airstream is fed.

## Description

### Technical Field

Present invention relates to a device for separating powder particles into fractions containing particles with certain characteristics, more specifically to a gravity inertial separator for the granulated materials. More specifically the invention relates to separating grinded electronic circuit board waste containing particles with a wide range of densities, sizes and shapes, into fractions with a narrow range of densities.

### Background Art

Powders obtained by grinding electronic circuit boards contain particles from 100 µm to 6 mm. The particles consist of a mixture of metals, plastic, epoxy resin, fiberglass and accordingly, the density of these particles varies continuously from 1.2 g/cm³ to 8.96 g/cm³. Particle shapes range from spherical to thin plates and needles.

The initial powder containing complex material must be divided into fractions according to density. The operating principle and design of the device are determined by the specific purpose and properties of the initial powder material.

Standard gravity separators are not suitable for these purposes, since they are based on only one parameter - the weight of the particles. In the initial powder, dense small particles and large, but less dense particles can have the same weight. Accordingly, other characteristics of particles should be included in the sorting principle: particle inertia, flow resistance coefficient (windage).

U.S. patent application US2012305686A1 discloses a system and method for processing a heterogeneous waste stream. In particular, provided is a method comprising: processing a municipal solid waste stream to remove non-combustible waste; selecting components of the processed waste stream based on their density; combining a quantity of first selected component with a quantity of a sorbent to form a sorbent-containing intermediate material; and combining a quantity of a second selected component with the intermediate material to form an engineered fuel feed stock.

UK patent GB659531A discloses an apparatus for sorting out powders according to particle size. In an apparatus for sorting small particles according to size, the particles are fed into an air or gas stream to be suspended therein and projected therewith into an expanding flow separation chamber comprising a plurality of spaced collection sections.

### Summary of Invention

Present invention provides a gravity inertial separator.

The separator operation is based on an inertia (dependent on a density and a size) and a drag (dependent on a size) of the powder particles. Inertial particles, upon entering an air stream, fail to accelerate quickly and are ejected from the stream due to a gravity. These particles settle in the sections closer to an entrance of the separation chamber. More drag-prone and less dense particles accelerate with the air stream and settle in the farther sections of the chamber.

The separator consists of the following functional parts:
a) An air stream formation device, which is for a formation of an air stream containing particles to be separated. The air stream formation device comprises three adjacent parallel channels, where into a middle channel an airstream containing particles to be separated is fed.
b) A separation chamber, which is for separation of particles from the air stream according to a size and mass of the particles.
c) A particles discharge and dust collection system, comprising cyclones, pressure regulators, fine particle cyclone and a filter.
d) Air drive system, which comprises at least one fan, where the air drive system is used to create the air stream and to recirculate the air exiting from the separation chamber back into the separation chamber.

Present invention provides a gravity inertial separator, comprising a longitudinal horizontal separation chamber, comprising an entrance at the first end wall for feeding from an air stream formation device into said separation chamber an air stream comprising particles to be separated, and exit at the other end wall of said separation chamber.

Said separation chamber has been divided in a longitudinal direction into multiple vertical sections by the baffle plates rising from the bottom of said separation chamber.

A heigh of the successive baffle plates decreases in the direction of air stream from the entrance of the separation chamber to the exit of the separation chamber.

Said vertical sections between the end walls and baffle plates and said sections between the baffle plates comprising at least one outlet from the separation chamber.

The air stream formation device comprises three adjacent parallel channels, where into a middle channel an airstream containing particles to be separated is fed and into the lateral channels on either side of said middle channel an airstream is fed. In other words, to the lateral channels an airstream is fed, which does not contain particles to be separated. Said three channels are parallel in a horizontal plane, that is said channels lie side by side.

The purpose of the side channels is to keep the airstream containing particles hitting away from the side walls of the separation chamber.

The entrance at the first end wall into the separation chamber is located at the upper part of the end wall.

The baffle plates are at angle from the vertical in the direction to the exit of the separation chamber.

The particles are introduced into the air stream in an entrance channel 3-5 cm from the entrance of the chamber.

The exit at the other end wall of said separation chamber is provided with a fine particle cyclone separator.

Each outlet from the separation chamber is provided with a cyclone separator.

In the first embodiment of the invention, the separation chamber is divided into at least four sections.

In the most preferred embodiments of the invention, the separation chamber is divided into four to eight sections.

The baffle plates are at angle to the vertical in a range between 47° to 57°.

The ends of the baffle plates are at angle to vertical in a range between 50° to 64°, where said angle of the end of the baffle plate is greater than the angle of the baffle plate to the vertical.

### Brief Description of Drawings

Present invention is described below with reference to the accompanying schematic drawings, in which:
Figure 1 depicts a gravity inertial separator in longitudinal section view;
Figure 2 depicts a baffle plate of the gravity inertial separator; and
Figure 3 depicts a visual representation of the results of numerical experiments based on the developmental model of particle movement in turbulent air flow in a proposed gravity-inertial separator of invention.

### Description of Embodiments

For the sake of clarity of the drawings, the same details and elements are denoted by the same reference numerals in the various figures. Also, for the sake of simplicity and clarity of the drawing, elements not necessary for an understanding of the invention, are not shown.

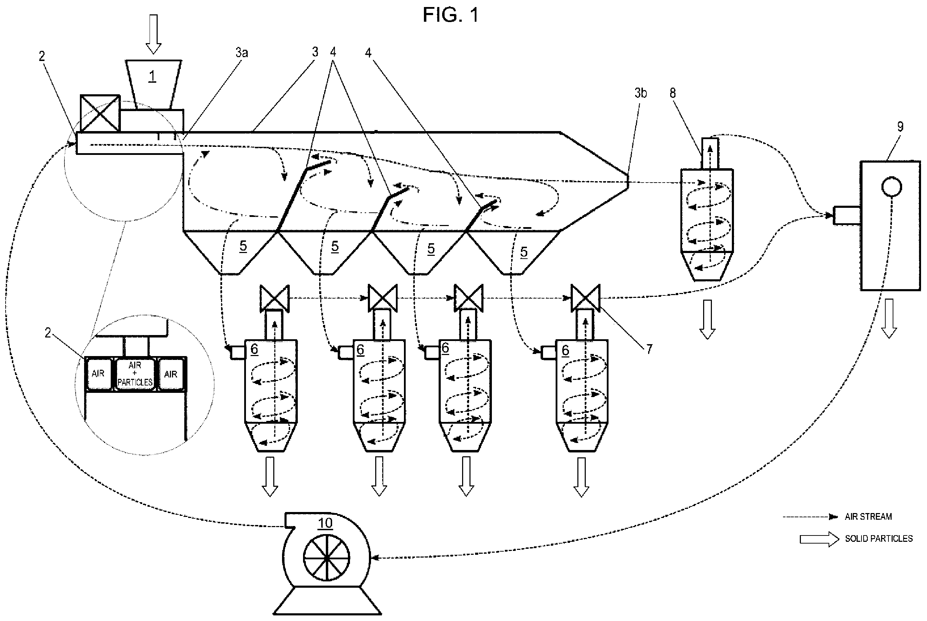

Figure 1 depicts a a gravity inertial separator, where feeder-dosing device 1 is used to fed particles to be separated into an airstream formation device 2, comprising three adjacent parallel horizontal channels, where into a middle channel an airstream containing particles to be separated are fed from said feeder-dosing device 1.

Into the lateral channels on either side of said middle channel a clean airstream is fed. Said clean airstreams from lateral channels keep middle airstream containing solid particles away from the side walls of the separation chamber 3.

From this airstream formation device 2 particles are introduced into the separation chamber 3. The separation chamber 3 is designed to separate particles by density and includes in the chamber 3 baffles 4 with adjustable tilt angles, and outlets 5 at the bottom of said chamber 3.

The separation chamber 3 comprises an entrance 3a at the first end wall for feeding from an air stream formation device 2 into said separation chamber 3 an air stream comprising particles to be separated and exit at the other end wall of said separation chamber 3.

The separation chamber 3 has been divided in a longitudinal direction into multiple vertical sections by the baffle plates 4 rising from the bottom of said separation chamber 3. At the bottoms of said sections are outlets 5, comprising a pressure regulator 7 and cyclone 6.

On the schematic drawing Figure 1 for a sake of clarity of drawing connection tubes between the outlets 5 and regulators 7 and cyclones 6 are not shown.

Dependent on a density and a size of the particles in the middle airstream, said particles fell into the said vertical sections between baffle plates 4.

Particles discharge and dust collection is implemented by transporting collected particles from said vertical sections through outlets 5 into cyclones 6, which separate particles from the air stream from the outlet 5.

Airstream at an exit at the other end wall of said separation chamber 3 is directed into a fine particle cyclone 8 and airstream from the cyclone 8 and from the cyclones 6 are directed into an air filter 9 for removal of a dust and residual fine particles from the airstream.

On the schematic drawing Figure 1 for a sake of clarity of drawing connection tubes between the exit 3b from the separation chamber, fine particle cyclone 8 and the air filter 9 are not shown.

Air from the air filter 9 is recycled back into the separation chamber 3 using an air drive system comprising at least one fan 10 for generating airstreams.

This air drive system maintains the specified pressure differential and comprises at least one fan 10 and air ducts.

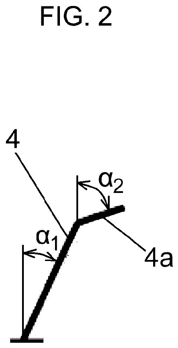

As it can be seen from the Figure 2, the baffle plates 4 are at angle α₁ to the vertical and the ends 4a of the baffle plates 4 are also angled even more in relation to the vertical (angle α₂).

On Figures 1 and 2 angle α₁ is 52° and angle α₂ is 57°. Range of angle α₁ is between 47° to 57° and the range of angle α₂ is between 50° to 64°. The angled end 4a accelerates the velocity decrease of the particles, hence effectively preventing particles from passing over the baffle plate 4. Specific angles α₁ and α₂ are derived from the mathematic models and numerical experiments with said models - angles are dependant from a velocity of the airstream, chamber dimensions, *etc.*

The decrease of the height of subsequent baffle plates 4 is steadily about 20%, normally in the range of 15% to 25%.

### Principle of Operation of Gravity Inertial Separator

The air stream formation device 2 creates ai-streams in three rectangular channels, forming three parallel air streams in the separation chamber 3: one central and two side streams. The side streams ensure a more uniform velocity field in the central stream and prevent particles from reaching the side walls of the separation chamber 3.

Particles are introduced into the central stream via the feeder-dosing device 1 close to the entrance 3a into the chamber 3.

The particles accelerate in the stream depending on their inertia and drag.

Highly inertial particles settle at the bottom of the chamber 3 in the vertical sections closes to the inlet to the chamber 3 and are removed via cyclones 6 through outlets 5.

Fine particles (less than 100 µm in size) are collected in the fine particle cyclone 8. Clean air, after passing through the filter 9, is recirculated into the system using the fan 10.

Inclined baffle plates 4 with adjustable tilt angles of varying heights at the chamber's bottom prevent the reverse movement of light particles and eliminate clogging of separated dense particles in the initial sections by less dense particles.

Particles are introduced into the air stream 3-5 cm from the entrance 3a into separation chamber 3. In an existing prior art sepators the air-particle mixture is formed far before entering the chamber.

These prior art separators do not specify the conditions for forming the mixture, a complex phenomenon studied in multiphase flow mechanics.

Factors such as channel length, particle-to-channel diameter ratio, particle density and size, and wall roughness significantly influence particle distribution.

The proposed separator of the invention reduces the impact of these parameters by introducing particles directly into the chamber's air stream.

According to the initial size and application the length of the device chamber 3 may vary between 2 m and 4 m. The number of outlets 5 may vary upon application from 4 to 8.

**Table 1. Range of materials tested and processable with the stated invention. The range of densities provided justifies use of the invention on the materials with similar densities.**

| **Material** | **Category** | **Density (g/cm³)** |
|---|---|---|
| Polyethylene (PE) | Plastic/Insulation | 0.92 - 0.97 |
| Polypropylene (PP) | Plastic/Insulation | 0.85 - 0.92 |
| Epoxy Resin | Substrate/Adhesive | 1.1 - 1.2 |
| Glass Fiber (FR-4) | Reinforcement (PCB) | 2.0 - 2.6 |
| Silicon (Si) | Semiconductor Material | 2.33 |
| Aluminum (Al) | Heat Sink/Housing | 2.70 |
| Tin (Sn) | Solder/Coating | 7.31 |
| Iron (Fe) | Magnetic Cores/Structural | 7.87 |
| Nickel (Ni) | Coating/Alloying | 8.91 |
| Copper (Cu) | Conductive Layer/Wires | 8.96 |
| Steel (Various Alloys) | Component Leads/Housings | 7.75 - 8.05 |
| Lead (Pb) | Solder (Traditional) | 11.34 |

The separator of invention provides a uniform velocity field in the airstream.

The particles move in a uniform air velocity field across the cross-section due to two side streams of clean air. These side streams also prevent particles from reaching the chamber walls, where air velocity sharply decreases, forming a boundary layer.

Inclined baffle plates 4 improve separation of particles - the use of inclined baffle plates 4 of varying heights along the chamber 3 length eliminates the backflow of light particles and prevents the contamination of dense fractions. Existing prior art separators do not take into account for the effect of turbulent flow structure on separation results, particularly crucial when dealing with easily entrainable particles.

The separator of the invention provides an improved fraction evacuation.

The device employs small cyclones 6 with adjustable airflow for fraction evacuation. By removing part of the air through these cyclones 6, vortex formation in the chamber's lower sections is significantly reduced, improving the purity of separated fractions.

During the development of the proposed gravitational-inertial separator, a 3-dimensional mathematical model of the particles motion in a turbulent airstream in the settling chamber was created. The model is based on the k-epsilon gas phase turbulence model. The motion of particles in a turbulent airstream is described in the Lagrangian approximation. This takes into account the effects of gravity and drag forces, as well as the turbulent dispersion of particles, particle-particle and particle-wall collisions.

The computational model was implemented based on the free, open-source software for computational fluid dynamics, OpenFoam. The model was tested based on data obtained in experiments on a pilot separator.

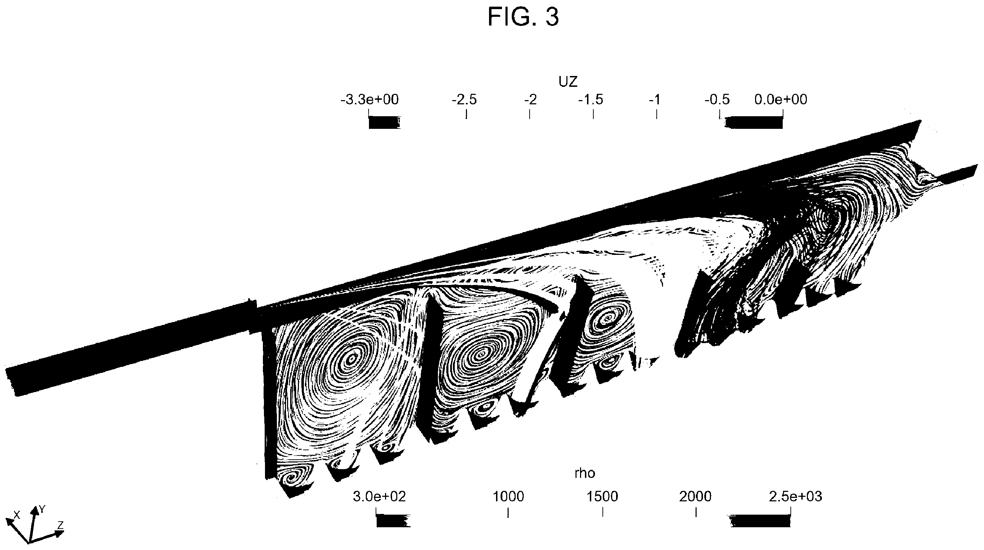

Numerical experiments (Figure 3) based on the developed model allowed to optimize the parameters of the proposed gravitational-inertial separator.

The mechanical properties of the particles were defined through a series of physical tests that resulted in big data.

### Reference signs list

1 - feeder-dosing device
2 - airstream formation device
3 - separation chamber
3a - entrance into the separation chamber
3b - exit from the separation chamber
4 - baffle plate
4a - bent end of baffle plate
5 - outlet
6 - cyclone
7 - pressure regulator
8 - fine particle cyclone
9 - air filter
10 - fan
α₁ - angle of baffle plate 4 to the vertical
α₂ - angle of the bent end 4a of baffle plate 4 to the vertical

## Claims

1. A gravity inertial separator for the granulated materials, comprising a longitudinal horizontal separation chamber (3), comprising an entrance (3a) at the first end wall for feeding from an air stream formation device (2) into said separation chamber (3) an air stream comprising particles to be separated and exit at the other end wall of said separation chamber (3), where said separation chamber (3) has been divided in a longitudinal direction into multiple vertical sections by the baffle plates (4) rising from the bottom of said separation chamber (3), where a heigh of the successive baffle plates (4) decreases in the direction of air stream from the entrance (3a) to the exit, where said vertical sections between the end walls and baffle plates (4) and said sections between the baffle plates (4) comprising at least one outlet (5) from the separation chamber (3), **characterized in that,** the air stream formation device comprises three adjacent parallel channels, where into a middle channel an airstream containing particles to be separated is fed and into the lateral channels on either side of said middle channel an airstream is fed.

2. The gravity inertial separator according to claim 1, **characterized in that,** the entrance (3a) at the first end wall into the separation chamber (3) is located at the upper part of the end wall.

3. The gravity inertial separator according to any previous claim, **characterized in that,** the baffle plates (4) are at angle from the vertical in the direction to the exit of the separation chamber (3).

4. The gravity inertial separator according to any previous claim, **characterized in that,** the particles are introduced into the air stream in an entrance (3a) channel 3-5 cm from the entrance (3a) of the separation chamber (3).

5. The gravity inertial separator according to any previous claim, **characterized in that,** the exit at the other end wall of said separation chamber (3) is provided with a fine particle cyclone separator (8).

6. The gravity inertial separator according to any previous claim, **characterized in that,** each outlet (5) from the separation chamber (3) is provided with a cyclone separator (6).

7. The gravity inertial separator according to any previous claim, **characterized in that,** the separation chamber (3) is divided into at least four sections.

8. The gravity inertial separator according to any previous claim 1 to 6, **characterized in that,** the separation chamber (3) is divided into four to eight sections.

9. The gravity inertial separator according to any previous claim, **characterized in that,** the baffle plates (4) are at angle (α₁) to the vertical in a range between 47° to 57°.

10. The gravity inertial separator according to claim 9, **characterized in that,** the ends (4a) of the baffle plates (4) are at angle (α₂) to vertical in a range between 50° to 64°, where said angle (α₂) of the end (4a) of the baffle plate (4) is greater than the angle (α₁) of the baffle plate (4) to the vertical.
